# FASCICULE DE BREVET EUROPEEN

(11) **EP 1 701 875 B1**
(45) Date de publication et mention de la délivrance du brevet: **23.01.2008**
(21) Numéro de dépôt: 04805712.9
(22) Date de dépôt: 15.12.2004
(51) Int. Cl.: B62D 49/06

(54) **MASSE MONOBLOC D'ALOURDISSEMENT POUR ETRE ACCROCHEE A UN RELEVAGE DE TRACTEUR AGRICOLE**
ZUM ANHÄNGEN AN EINER HEBEVORRICHTUNG FÜR EINEN ACKERSCHLEPPER AUSGEFÜHRTES EINSTÜCKIGES GEWICHT
SINGLE-PIECE WEIGHT DESIGNED TO BE HITCHED TO AN AGRICULTURAL TRACTOR LIFTING DEVICE

(30) Priorité: 06.01.2004 FR 0400059
(43) Date de publication de la demande: 20.09.2006
(73) Titulaire: Defrancq, Hubert, 02190 Guignicourt (FR)
(72) Inventeur: Defrancq, Hubert, 02190 Guignicourt (FR)
(74) Mandataire: Michardière, Bernard
(86) Numéro de dépôt international: PCT/FR2004/003235
(87) Numéro de publication internationale: WO 2005/075283

(56) Documents cités:
- EP-A- 0 315 595
- DE-A- 3 801 895
- JP-A- 10 297 890
- US-B1- 6 533 319

## Description

L'invention est relative à une masse monobloc d'alourdissement prévue pour être accrochée à un relevage de tracteur agricole.

Une telle masse présente une face supérieure, un fond, deux faces orientées transversalement à la direction de progression du tracteur, et deux faces latérales sensiblement parallèles à la direction de progression, chaque face latérale comportant un piton ou axe transversal constituant un moyen de prise pour le relevage du tracteur. Un moyen d'accrochage de troisième point peut être prévu sur la face supérieure de la masse.

Grâce à l'évolution des motorisations et des techniques de fabrication, les tracteurs agricoles ont vu leur puissance s'accroître considérablement sans que leur poids augmente dans les mêmes proportions. Il en résulte que le rapport puissance/poids du tracteur a sensiblement augmenté. Cette situation est bénéfique dans de nombreux cas :
- pour le transport, il est possible d'admettre une charge utile plus grande ;
- pour le travail superficiel du sol ou pour un travail animé par la prise de force du tracteur, le tassement du sol se trouve réduit si l'on compare, à puissance égale, un tracteur actuel avec un tracteur plus ancien.

La résistance au roulement est réduite, à puissance constante, de sorte que la puissance nécessaire au déplacement du tracteur est également réduite.

Toutefois, lors de travaux nécessitant un effort de traction relativement élevé, par exemple pour labourer le sol, il est nécessaire de transmettre efficacement la puissance en traction pour éviter un degré excessif de patinage des roues sur le sol qui est une source de gaspillage d'énergie, d'usure des pneumatiques et de détérioration des sols. On installe alors sur le tracteur une (des) masse(s) d'alourdissement pour disposer d'un ratio poids du tracteur/effort de traction suffisant.

En outre les outils attelés au tracteur sont de plus en plus importants et donc lourds. Il faut pouvoir les contrebalancer pour équilibrer la charge du tracteur et assurer sa stabilité. On ajoute ainsi des masses à l'avant du tracteur lorsque ce dernier est équipé d'un outil arrière, ou des masses à l'arrière lorsque ce dernier est équipé, par exemple, d'un chargeur frontal.

Une solution relativement ancienne consiste à prévoir, sur le tracteur, un support qui peut recevoir plusieurs masses. Chaque masse, individuellement, a une valeur insuffisante pour améliorer sensiblement la transmission de puissance en traction.

Depuis quelques années sont apparues des masses dites « monobloc », d'une seule pièce ou constituées par l'assemblage de plusieurs sous-ensembles formant un seul bloc, ayant une valeur suffisante d'au moins 500 kg et pouvant atteindre ou dépasser 1500 kg, pour l'amélioration de la transmission de puissance en traction . Le nombre de masses à manipuler se trouve réduit, ce qui simplifie le montage, mais la valeur élevée de la masse pose un problème de manipulation.

Une masse monobloc de ce type est connue d'après EP-A-0 315 595.Une telle masse comporte sur chaque face latérale un piton ou axe transversal constituant un moyen de prise pour le relevage trois points du tracteur. L'accrochage de la masse au tracteur est grandement facilité. Un accrochage de troisième point peut être prévu sur la face supérieure de la masse pour éviter un mouvement d'oscillation autour des pitons ou axes latéraux.

Des situations se présentent toutefois pour lesquelles la manipulation de ces masses monoblocs, d'un poids relativement élevé, doit être effectuée en l'absence d'un tracteur équipé d'un relevage de type trois points. C'est le cas par exemple lors de la fabrication des masses, lors de leur expédition et lors des phases de chargement et de déchargement chez les distributeurs.

La présence des pitons ou axes transversaux en saillie sur les faces latérales, ou du point d'ancrage de troisième point supérieur, permet toutefois d'accrocher des câbles ou élingues pour soulever la masse à l'aide d'un engin de levage usuel.

Ainsi, jusqu'à ce jour, la présence de ces pitons ou du point d'ancrage supérieur est apparue comme un moyen de prise suffisant aux hommes du métier pour la manipulation des masses monoblocs.

L'inventeur, au lieu de considérer ce moyen de prise comme satisfaisant selon l'opinion générale dans la technique, a cherché à faciliter encore plus la manutention de telles masses monoblocs, notamment en l'absence d'un relevage trois points, sans pour autant compliquer à l'excès leur fabrication, ni augmenter sensiblement le coût de production.

On connaît par ailleurs, d'après JP-10 297890, une masse monobloc, pour chariot élévateur, comportant sur sa face supérieure des arceaux formant poches pour le passage des branches d'une fourche d'un autre chariot élévateur. La réalisation des arceaux complique la fabrication. En outre cette masse ne peut être facilement accrochée à un relevage trois points d'un tracteur agricole.

Selon l'invention, une masse monobloc prévue pour être accrochée à un relevage de tracteur agricole, du genre défini précédemment, est caractérisée en ce qu'elle comporte au moins une rainure dans le fond de la masse, cette rainure s'étendant à partir d'un bord du fond, débouchant à l'extérieur à au moins une extrémité et étant orientée de manière à pouvoir recevoir au moins une branche de levage d'un dispositif de manutention de charge et à permettre le soulèvement et la manutention de la masse par coopération de la rainure et de la branche de levage.

Il devient ainsi possible de manoeuvrer directement la masse avec le dispositif de manutention, sans avoir à utiliser des câbles ou des élingues.

De préférence le fond comporte deux rainures parallèles dont l'espacement est prévu pour permettre le passage des branches d'un transpalette à écartement fixe.

Les rainures admettent généralement une section transversale sensiblement en U renversé, ouverte vers le bas.

Selon une variante, les rainures sont prévues sur les bords inférieurs de la masse et sont ouvertes latéralement vers l'extérieur en présentant une section transversale sensiblement en angle droit.

Selon une autre variante, le fond peut comporter une seule rainure centrale de largeur suffisante pour recevoir les deux branches de la fourche du dispositif de manutention de charge, cette rainure étant bordée par deux zones en saillie vers le bas.

Les rainures peuvent être orientées à angle droit par rapport à la direction des pitons d'accrochage.

En variante, les rainures peuvent être parallèles à la direction des pitons d'accrochage.

Les faces latérales de la masse peuvent comporter des parties inclinées convergentes et les rainures sont ouvertes latéralement vers l'extérieur au niveau de ces parties inclinées.

L'invention consiste, mises à part les disposition exposées ci-dessus, en un certain nombre d'autres dispositions dont il sera plus explicitement question ci-après à propos d'exemples de réalisation décrits en détail avec référence aux dessins annexés, mais qui ne sont nullement limitatifs. Sur ces dessins :
Fig.1 est une vue en élévation de l'avant d'une masse monobloc selon l'invention.
Fig.2 est une vue de dessus par rapport à Fig.1.
Fig.3 est une vue de gauche par rapport à Fig.1.
Fig.4 est une vue en perspective de l'avant du côté droit de la masse de Fig.1.
Fig.5 montre, semblablement à Fig.1, une variante de la partie inférieure de la masse, et
Fig.6 montre, semblablement à Fig.5, une autre variante de la partie inférieure.

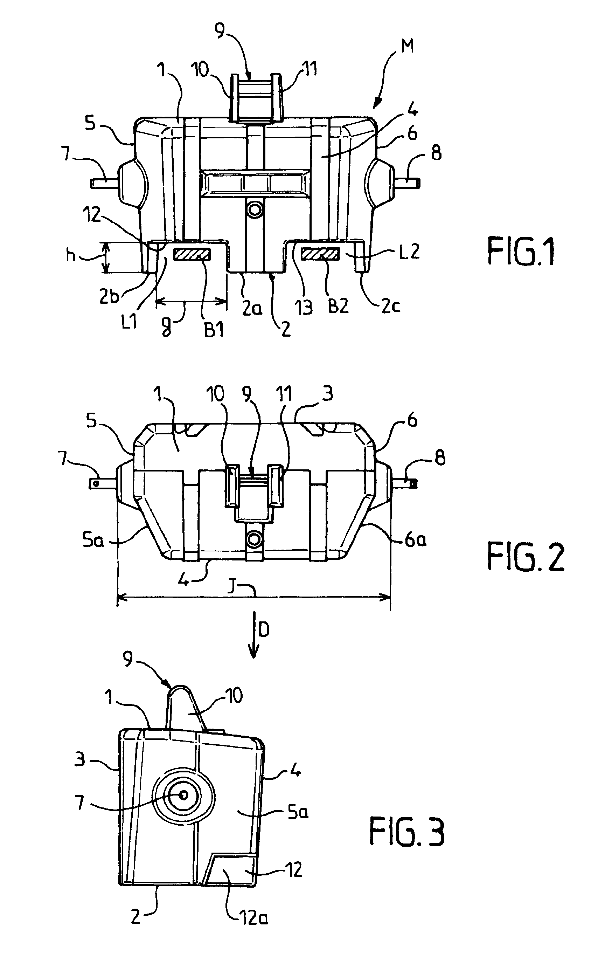

En se reportant aux Figs. 1 à 4 des dessins, on peut voir une masse monobloc M prévue pour être accrochée à un relevage (non représenté) du type à trois points de tracteur agricole. La masse M présente une face supérieure 1, un fond 2, deux faces 3, 4 orientées transversalement à la direction de progression D du tracteur (non représenté) et deux faces latérales 5, 6 sensiblement parallèles à la direction de progression. Globalement, la masse peut avoir sensiblement la forme d'un parallélépipède rectangle. Dans l'exemple représenté, les faces latérales 5,6 se prolongent vers l'avant par des parois 5a,6a, inclinées convergeant du côté opposé à la face transversale 3 située vers l'arrière.

Il est à noter que les termes « avant » et « arrière » sont à considérer de manière relative. Dans l'exemple représenté la face transversale 4 est désignée comme face avant dans la mesure où la masse M est accrochée à un relevage avant de tracteur, auquel cas la face 4 est située la première suivant la direction de progression D. Par contre, si la masse M est accrochée à un relevage arrière de tracteur, c'est la face transversale 3 qui se trouve la première suivant la direction de progression D tandis que la face transversale 4 est tournée vers l'arrière.

Chaque face latérale 5, 6 comporte un piton ou axe transversal 7, 8 solidement ancré dans la masse et constituant un moyen de prise pour les deux bras inférieurs du relevage du tracteur. Les pitons 7 et 8 sont alignés horizontalement et perpendiculairement à la direction D.

De préférence la face supérieure 1 comporte, au milieu, un moyen d'accrochage 9 recevant le support reliant le troisième point milieu haut du relevage du tracteur. Le moyen d'accrochage 9 peut être constitué par une barre horizontale ancrée à chaque extrémité dans des plaquettes verticales 10, 11 faisant partie de, ou étant fixées solidement à, la masse M.

En variante, notamment avec des masses de l'ordre de 1200 kg ou plus, pour éviter un déport longitudinal trop important, on peut élargir la masse vers l'avant tout en conservant au niveau des pitons 7, 8 et en arrière, une largeur suffisamment réduite pour passer entre les bras du relevage.

La masse M, selon Figs.1 à 4 comporte deux logements L1, L2 horizontaux débouchant à l'extérieur et prévus pour recevoir les branches de levage B1, B2 d'une fourche d'un dispositif de manutention (non représenté) de charge. Les branches B1, B2 en coopérant avec la paroi supérieure horizontale de chaque logement permettent de soulever et déplacer la masse.

Selon Figs. 1 à 4, les deux logements L1, L2 sont constitués respectivement par une partie évidée du fond 2. Chaque partie évidée est constituée par une rainure 12, 13 s'étendant d'un bord du fond au bord opposé, ouverte vers le bas et débouchant à chaque extrémité. De préférence les rainures 12, 13 sont à angle droit par rapport à la direction des pitons d'accrochage 7, 8. L'espacement des rainures 12, 13 parallèlement aux pitons 7, 8 est choisi pour permettre l'introduction dans ces rainures des branches B1, B2 d'une fourche de transpalette à écartement fixe. La largeur g des rainures est choisie pour rendre aisée l'introduction des branches B1, B2, et pour faciliter l'utilisation des élévateurs avec fourche à largeur réglable.

La solution avec deux rainures 12, 13 permet de disposer sur le fond 2 de trois zones de contact 2a, 2b, 2c avec le sol, ce qui permet d'assurer la stabilité et de limiter les risques d'enfoncement dans le sol.

Il est à noter que les rainures 12, 13 sont ouvertes latéralement vers l'extérieur en 12a, 13a du fait de l'inclinaison des parties 5a, 6a des faces latérales de la masse. Ces ouvertures 12a, 13a facilitent l'engagement des branches B1, B2 dans les rainures.

La hauteur h des rainures 12 et 13 est nettement supérieure à l'épaisseur des branches B1, B2 de la fourche. Cette hauteur h est de préférence supérieure à 10 cm .

Fig.5 illustre une variante de réalisation selon laquelle le fond 102 comporte une seule partie évidée formée par une rainure 112 dont la largeur est suffisante pour recevoir les deux branches B1, B2. La rainure 112 est bordée, de chaque côté, par des parties 102b, 102c en saillie qui viennent en contact avec le sol.

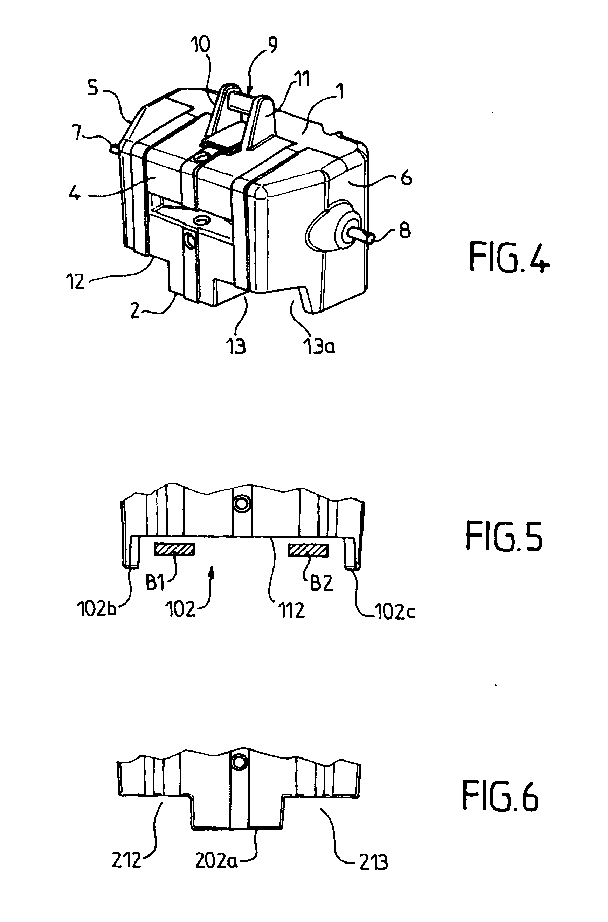

Fig. 6 montre une autre variante de réalisation selon laquelle le fond 202 de la masse comporte une partie évidée 212, 213 sur chacun de ses bords longitudinaux, ces parties évidées ayant une section transversale en angle droit ouvert vers l'extérieur. Le fond comporte ainsi une protubérance centrale qui détermine la zone de contact 202a avec le sol.

Selon une variante non représentée, il est possible de réaliser les parties évidées constituées par les rainures 12, 13, 112, 212 et 213 suivant une direction parallèle à celle des pitons 7, 8, c'est-à-dire orthogonale à la direction D de progression.

Selon une autre possibilité, deux systèmes de rainures orthogonales pourraient être prévus dans le fond de la masse, un premier système de rainures orthogonales à la direction des pitons 7 et 8 comme illustré sur Figs. 1 à 4 et un deuxième système de rainures parallèles à la direction des pitons 7 et 8. Une telle solution permet d'augmenter les possibilités d'accostage de la masse M avec un engin de manutention, ce qui facilite les opérations visant à déplacer la masse.

La surface totale du fond en contact avec le sol, c'est-à-dire la surface totale des zones 2a, 2b, 2c dans l'exemple des Figs. 1 à 4, ou la surface totale des zones 102b, 102c (Fig.5) ou de la zone 202 (Fig.6) est choisie de manière que la pression exercée sur le sol soit suffisamment faible pour éviter un enfoncement important dans un sol meuble. Cette pression est de préférence au plus égale à 2.10⁵ Pa.

La largeur J de la masse M depuis les pitons d'attelage 7, 8 jusqu'à la face 3 est limitée pour se loger entre les bras inférieurs d'un relevage trois points de tracteur, afin de limiter le déport longitudinal.

Dans les exemples décrits précédemment, les logements L1, L2 débouchent vers le bas. En variante, ces logements horizontaux pourraient comporter une paroi inférieure et présenter une section droite à contour fermé rectangulaire. Une masse M conforme à l'invention peut être manipulée aisément à l'aide d'un transpalette ou d'un chariot de manutention à fourche.

Tout en restant dans le cadre de l'invention, on peut réaliser une masse monobloc par l'assemblage de plusieurs sous-ensembles constituant alors un seul bloc. Ceci permet de réaliser des masses monoblocs de poids variables par assemblage de modules élémentaires.

## Revendications

1. Masse monobloc d'alourdissement (M) pour être accrochée à un relevage de tracteur agricole, présentant une face supérieure, un fond, deux faces orientées transversalement à la direction de progression du tracteur, et deux faces latérales sensiblement parallèles à la direction de progression, chaque face latérale comportant un piton ou axe transversal (7,8) constituant un moyen de prise pour le relevage du tracteur, **caractérisée en ce qu'**elle comporte au moins une rainure (12, 13 ; 112; 212,213) dans le fond de la masse, cette rainure s'étendant à partir d'un bord du fond, débouchant à l'extérieur à au moins une extrémité et étant orientée de manière à pouvoir recevoir au moins une branche de levage (B1,B2) d'un dispositif de manutention de charge et à permettre le soulèvement et la manutention de la masse par coopération de la rainure et de la branche de levage.

2. Masse selon la revendication 1, **caractérisée en ce que** le fond comporte deux rainures parallèles (12, 13) dont l'espacement est prévu pour permettre le passage des branches d'un transpalette à écartement fixe.

3. Masse selon la revendication 2, **caractérisée en ce que** les rainures (12, 13 ; 112) admettent une section transversale sensiblement en U renversé, ouverte vers le bas.

4. Masse selon la revendication 2, **caractérisée en ce que** les rainures (212, 213) sont prévues sur les bords inférieurs de la masse et sont ouvertes latéralement vers l'extérieur en présentant une section transversale sensiblement en angle droit.

5. Masse selon la revendication 1, **caractérisée en ce que** le fond comporte une seule rainure centrale (112) de largeur suffisante pour recevoir les deux branches de la fourche du dispositif de manutention de charge, cette rainure étant bordée par deux zones (102b, 102c) en saillie vers le bas.

6. Masse selon l'une des revendications 1 à 5, **caractérisée en ce que** les rainures (12,13 ; 112 ; 212,213) sont orientées à angle droit par rapport à la direction des pitons d'accrochage (7,8).

7. Masse selon l'une des revendications 1 à 5, **caractérisée en ce que** les rainures sont parallèles à la direction des pitons d'accrochage (7,8).

8. Masse selon la revendication 6, **caractérisée en ce que** les faces latérales (5,6) de la masse comportent des parties inclinées (5a, 6a) convergentes et que les rainures (12, 13) sont ouvertes latéralement vers l'extérieur (12a, 13a) au niveau de ces parties inclinées (5a, 6a).

## Claims

1. Single-piece weight (M) to be hitched to an agricultural tractor lifting device, having a top face, a bottom, two faces oriented transverse to the direction of travel of the tractor, and two side faces substantially parallel to the direction of travel, each side face comprising a transverse eye-bolt or spindle (7, 8) forming a means of engagement for the tractor lifting device, **characterized in that** it comprises at least one groove (12, 13; 112; 212, 213) in the bottom of the weight, this groove extending from one edge of the bottom, emerging on the outside at at least one end and being oriented so as to be able to receive at least one lift prong (B1, B2) of a load-handling device and to allow the weight to be lifted and handled by interaction of the groove and the lift prong.

2. Weight according to Claim 1, **characterized in that** the bottom comprises two parallel grooves (12, 13) whose spacing is designed to allow the prongs of a fixed spacing pallet truck to pass.

3. Weight according to Claim 2, **characterized in that** the grooves (12, 13; 112) accept a substantially inverted U cross section, open downward.

4. Weight according to Claim 2, **characterized in that** the grooves (212, 213) are provided on the bottom edges of the weight and are open laterally outward having a substantially right angle cross section.

5. Weight according to Claim 1, **characterized in that** the bottom comprises a single central groove (112) of sufficient width to receive the two prongs of the fork of the load-handling device, this groove being bordered by two zones (102b, 102c) protruding downward.

6. Weight according to one of Claims 1 to 5, **characterized in that** the grooves (12, 13; 112; 212, 213) are oriented at right angles relative to the direction of the hitching eye-bolts (7, 8).

7. Weight according to one of Claims 1 to 5, **characterized in that** the grooves are parallel to the direction of the hitching eye-bolts (7, 8).

8. Weight according to Claim 6, **characterized in that** the side faces (5, 6) of the weight comprise convergent inclined portions (5a, 6a) and **in that** the grooves (12, 13) are open laterally outward (12a, 13a) at these inclined portions (5a, 6a).

## Patentansprüche

1. Schwere Monoblock-Masse (M) zum Anhängen an eine Hebeeinrichtung einer landwirtschaftlichen Zugmaschine, mit einer Oberseite, einem Boden, zwei quer zur Bewegungsrichtung der Zugmaschine gerichteten Seiten, und zwei zur Bewegungsrichtung im wesentlichen parallelen Seitenflächen, wobei jede Seitenfläche einen Ringschraube oder eine querverlaufende Achse (7, 8) aufweist, die eine Zapfeinrichtung für die Hebeeinrichtung des Schleppers bilden, **dadurch gekennzeichnet, dass** es mindestens eine Nut (12, 13; 112; 212, 213) im Boden der Masse aufweist, wobei sich diese Nut von einem Rand des Bodens aus erstreckt, an mindestens einem Ende auf der Außenseite mündet und derart ausgerichtet ist, dass sie mindestens einen Hebearm (B1, B2) einer Lasthandhabungsvorrichtung aufnehmen kann und das Anheben und Handhaben der Masse durch Zusammenwirken der Nut und des Hebearms ermöglicht.

2. Masse nach Anspruch 1, **dadurch gekennzeichnet, dass** der Boden zwei parallele Nuten (12, 13) aufweist, deren Abstand derart gewählt ist, dass er den Durchtritt der einen festen Abstand aufweisenden Zinken eines Gabelhubwagens ermöglicht.

3. Masse nach Anspruch 2, **dadurch gekennzeichnet, dass** die Nuten (12, 13; 112) einen im wesentlichen umgekehrt U-förmigen Querschnitt aufweisen, der nach unten offen ist.

4. Masse nach Anspruch 2, **dadurch gekennzeichnet, dass** die Nuten (212, 213) an den unteren Rändern der Masse vorgesehen und seitlich nach außen offen sind, wobei sie einen im wesentlichen rechtwinkligen Querschnitt aufweisen.

5. Masse nach Anspruch 1, **dadurch gekennzeichnet, dass** der Boden eine einzige mittige Nut (112) mit einer Breite aufweist, die ausreicht, um die beiden Zinken der Gabel der Lasthandhabungsvorrichtung aufzunehmen, wobei die Nut von zwei nach unten vorstehenden Zonen (102b, 102c) begrenzt ist.

6. Masse nach einem der Ansprüche 1 bis 5, **dadurch gekennzeichnet, dass** die Nuten (12, 13; 112; 212, 213) in bezug auf die Richtung der Anhängringschraube (7, 8) rechtwinklig ausgerichtet sind.

7. Masse nach einem der Ansprüche 1 bis 5, **dadurch gekennzeichnet, dass** die Nuten zu der Richtung der Anhängringschraube (7, 8) parallel verlaufen.

8. Masse nach Anspruch 6, **dadurch gekennzeichnet, dass** die Seitenflächen (5, 6) der Masse konvergierende schräge Bereiche (5a, 6a) aufweisen, und dass die Nuten (12, 13) an den schrägen Bereichen (5a, 6a) seitlich nach außen (12a, 13a) offen sind.
